# FASCICULE DE BREVET EUROPEEN

(11) **EP 0 874 685 B1**
(45) Date de publication et mention de la délivrance du brevet: **25.08.1999**
(21) Numéro de dépôt: 96934955.4
(22) Date de dépôt: 23.10.1996
(51) Int. Cl.: B01J 2/04

(54) **GRANULES REDISPERSABLES DANS L'EAU COMPRENANT UNE MATIERE ACTIVE SOUS FORME LIQUIDE ET UN TENSIO-ACTIF NON IONIQUE DU TYPE ALCOXYLES**
IN WASSER REDISPERGIERBARE GRANULATE ENTHALTEND FLÜSSIGER AKTIVE STOFF UND NICHT IONISCHEN TENSID VOM ALKXYL-TYP
WATER-REDISPERSIBLE GRANULES INCLUDING A LIQUID ACTIVE MATERIAL AND A NON-IONIC ALKOXYL-TYPE SURFACTANT

(30) Priorité: 25.10.1995 FR 9512585
(43) Date de publication de la demande: 04.11.1998
(73) Titulaire: RHODIA CHIMIE, 92408 Courbevoie Cédex (FR)
(72) Inventeur: GUERIN, Gilles, F-95600 Eaubonne (FR); MORVAN, Mikel, F-92400 Courbevoie (FR); BIBETTE, Jérôme, F-33000 Bordeaux (FR)
(74) Mandataire: Wattremez, Catherine
(86) Numéro de dépôt international: FR9601653
(87) Numéro de publication internationale: WO9715385

(56) Documents cités:
- WO-A-94/09058
- US-A- 4 814 376
- DATABASE WPI Derwent Publications Ltd., London, GB; AN 81-50852d XP002008139 & JP,A,56 061 497 (NIPPON SURFACTANT KK) , 26 Mai 1981
- DATABASE WPI Derwent Publications Ltd., London, GB; AN 93-330525 XP002008140 & JP,A,05 236 886 (LION CORP) , 17 Septembre 1993

## Description

La présente invention a pour objet des granulés redispersables dans l'eau comprenant une matière active sous forme liquide, leur procédé de préparation et leur utilisation.

Dans certains domaines, comme par exemple ceux de l'alimentaire, de la cosmétique ou des peintures, on est conduit à préparer des formulations à partir de matières actives sous la forme de liquide hydrophobe. L'une des possibilités de formulation est de préparer des émulsions huile dans au de telles matières.

Cependant, on se trouve en face de problèmes liés à la stabilité au stockage de ces émulsions. En effet, il est courant de constater une séparation de phases plus ou moins importante des constituants de l'émulsion. En outre, on peut être confronté à des problèmes de désactivation de la matière active, ladite matière active pouvant se dégrader par hydrolyse lors du stockage.

Enfin, il n'est pas à négliger le fait que pour être facilement manipulables et pompables de telles formulations présentent des teneurs relativement peu élevées en matière active et une quantité d'eau importante.

La présente invention a donc pour objectif de proposer une alternative originale aux problèmes mentionnés ci-dessus en ce sens que les formulations proposées sont des poudres contenant des concentrations élevées en matière active initialement sous forme de liquide hydrophobe.

Ainsi, elle a pour objet des granulés redispersables dans l'eau comprenant :
- au moins une matière active sous forme de liquide hydrophobe,
- au moins un tensio-actif non ionique choisi parmi les dérivés polyoxyalkylénés,
- au moins un composé hydrosoluble choisi parmi les polyélectrolytes appartenant à la famille des polyacides faibles.

L'invention a de même pour objet un procédé de préparation de tels granulés consistant à mettre en oeuvre les étapes suivantes :
- on prépare une émulsion dans l'eau d'au moins une matière active, d'au moins un tensio-actif non ionique, d'au moins un composé hydrosoluble,
- on sèche l'émulsion ainsi obtenue.

Les granulés selon la présente invention présentent de nombreux avantages.

Tout d'abord, leur mise en forme permet d'éviter tous les problèmes dus à l'emploi d'émulsions. Ainsi, les problèmes d'instabilité au stockage sont évités, tels que notamment le crémage, la floculation, le mûrissement et la coalescence. Ces différents phénomènes sont décrits dans "ENCYCLOPEDIA of EMULSIONS TECHNOLOGY", volume 1 par Paul BECHER aux éditions MARCEL DEKKER INC., 1983.

Un autre avantage de la présente invention est que les concentrations en matières actives peuvent être très élevées en comparaison avec les émulsions. Par conséquent, lors de l'utilisation de ces granulés, une plus faible quantité de granulés sera suffisante.

Par ailleurs, la mise en forme selon l'invention permet de résoudre le problème de la désactivation de la matière active lorsque celle-ci est sensible à l'hydrolyse.

La présente invention permet aussi de disposer d'une préformulation sous forme de granulés, donc plus facilement utilisable que des émulsions par exemple dans le cas où ladite préformulation est ajoutée à une formulation en poudre.

En outre, les granulés selon l'invention, préparés à partir d'une émulsion, présentent l'avantage de se redisperser spontanément dans reau, pour donner à nouveau une émulsion présentant une granulométrie voisine de celle de l'émulsion initiale.

Enfin, la présente invention propose une solution aux problèmes de la mise en forme de produits liquides qui sont habituellement formulés par absorption sur un support. Ces formulations sont souvent peu concentrées en matière active et il peut se produire une séparation de phases entre le support et la matière active par migration de la matière active au cours du stockage.

Mais d'autres avantages et caractéristiques apparaîtront plus clairement à la lecture de la description et des exemples qui vont suivre.

Ainsi que cela a été indiqué auparavant, les granulés selon l'invention comprennent au moins une matière active sous la forme d'un liquide hydrophobe.

Toutes les matières actives conviennent à l'invention dans la mesure où elles se présentent à température ambiante sous forme de liquide non miscible ou très faiblement miscible dans l'eau ou sous une forme solubilisée dans un solvant organique.

Par faiblement miscible, on entend des matières actives dont la solubilité dans l'eau ne dépasse pas 10 % en poids.

Pu la suite, on entendra par matière active, soit la matière active pure, soit la matière active solubilisée dans un solvant, soit un solvant.

A titre d'exemple de matières actives dans le domaine de l'alimentaire, on peut citer les mono-, di- et triglycérides, les huiles essentielles, les arômes, les colorants.

A titre d'exemple de matières actives dans le domaine de la cosmétique on peut citer les huiles silicones appartenant par exemple à la famille des diméthicones.

A titre d'exemple de matières actives convenables pour la réalisation de l'invention, dans le domaine des peintures, on peut citer les résines alkydes, les résines époxy, les isocyanates bloqués ou non.

Dans le domaine du papier, on peut citer à titre d'exemple les résines de collage et d'hydrofugation telles que le dimère d'alkylcétène (AKD) ou l'anhydride alcényle succinique (ASA).

Dans le domaine de la détergence, on peut mentionner en tant que matière active possible les antimousses silicones.

Il est de même possible d'utiliser des matières actives telles que les lubrifiants pour le travail ou la déformation des matériaux.

Lorsque la matière active est un solvant ou un mélange de solvants, on met en oeuvre des solvants pas ou peu miscibles dans l'eau au sens indiqué précédemment. Parmi les solvants susceptibles d'être utilisés, on peut citer les solvants mis en oeuvre pour le nettoyage ou le décapage, tels que les coupes pétrolières aromatiques, les composés terpéniques comme le D-limonène, ou encore le L-limonène, ainsi que les solvants comme le Solvesso® (coupe pétrolière comprenant un mélange de composés aromatiques, riche en naphtalènes, commercialisé par la société EXXON). Conviennent aussi comme solvants, les esters aliphatiques, comme les esters méthyliques d'un mélange d'acides acétique, succinique et glutarique (mélange d'acides sous-produit de la synthèse du Nylon), les huiles comme l'huile de vaseline, et les solvants chlorés.

Bien évidemment, cette liste n'est donnée qu'à titre indicatif et ne saurait être exhaustive.

Les matières actives peuvent être mises en oeuvre telles quelles ou encore en présence d'un solvant organique. Plus particulièrement, ce solvant est choisi parmi les produits non solubles ou peu miscibles dans l'eau.

Par exemple, on peut mentionner les huiles minérales, les mono- di- et triglycérides d'acides gras saturés ou insaturés ; il peut s'agir de triglycérides de synthèse ou naturels, les coupes pétrolières aromatiques, les composés terpéniques (D-limonène, L-limonène), les esters aliphatiques et les solvants chlorés.

Les granulés selon l'invention comprennent en outre au moins un tensio-actif non ionique choisi parmi les dérivés polyoxyalkylénés.

Plus particulièrement, on peut citer :
- les alcools gras éthoxylés ou éthoxy-propoxylés
- les triglycérides éthoxylés ou éthoxy-propoxylés
- les acides gras éthoxylés ou éthoxy-propoxylés
- les esters de sorbitan éthoxylés ou éthoxy-propoxylés
- les amines grasses éthoxylées ou éthoxy-propoxylées
- les di(phényl-1 éthyl) phénols éthoxylés ou éthoxy-propoxylés
- les tri(phényl-1 éthyl) phénols éthoxylés ou éthoxy-propoxylés
- les alkyls phénols éthoxylés ou éthoxy-propoxylés

Le nombre de motifs oxyéthylène (OE) et/ou oxypropylène (OP) de ces tensio-actifs non ioniques varie habituellement de 2 à 100 selon la HLB (balance hydrophilie/lipophilie) souhaitée. Plus particulièrement, le nombre de motifs OE et/ou OP se situe entre 2 et 50. De préférence, le nombre de motifs OE et/ou OP est compris entre 10 et 50.

Les alcools gras éthoxylés ou éthoxy-propoxylés comprennent généralement de 6 à 22 atomes de carbone, les motifs OE et OP étant exclus de ces nombres. De préférence, ces motifs sont des motifs éthoxylés.

Les triglycérides éthoxylés ou éthoxy-propoxylés peuvent être des triglycérides d'origine végétale ou animale (tels que le saindoux, le suif, l'huile d'arachide, l'huile de beurre, l'huile de graine de coton, l'huile de lin, l'huile d'olive, l'huile de poisson, l'huile de palme, l'huile de pépin de raisin, l'huile de soja, l'huile de ricin, l'huile de colza, l'huile de coprah, l'huile de noix de coco et sont de préférence éthoxylés.

Les acides gras éthoxylés ou éthoxy-propoxylés sont des esters d'acide gras (tels que par exemple l'acide oléïque, l'acide stéarique), et sont de préférence éthoxylés.

Les esters de sorbitan éthoxylés ou éthoxy-propoxylés sont des esters du sorbitol cyclisés d'acide gras comprenant de 10 à 20 atomes de carbone comme l'acide laurique, l'acide stéarique ou l'acide oléïque, et sont de préférence éthoxylés.

Le terme triglycéride éthoxylé vise dans la présente invention, aussi bien les produits obtenus par éthoxylation d'un triglycéride par l'oxyde d'éthylène que ceux obtenus par transestérification d'un triglycéride par un polyéthylèneglycol.

De même, le terme acide gras éthoxylé inclue aussi bien les produits obtenus pas éthoxylation d'un acide gras par l'oxyde d'éthylène que ceux obtenus par transestérification d'un acide gras par un polyéthylèneglycol.

Les amines grasses éthoxylés ou éthoxy-propoxylés ont généralement de 10 à 22 atomes de carbone, les motifs OE et OP étant exclus de ces nombres, et sont de préférence éthoxylés.

Les alkylphénols éthoxylés ou éthoxy-propoxylé sont généralement 1 ou 2 groupes alkyles, linéaires ou ramifiés, ayant 4 à 12 atomes de carbone. A titre d'exemple on peut citer notamment les groupes octyles, nonyles ou dodécyles.

A titre d'exemples de tensio-actifs non ioniques du groupe des alkylphénols éthoxy ou éthoxy-propoxylés, des di(phényl-1 éthyl) phénols éthoxylés et des tri(phényl-1 éthyl) phénols éthoxy ou éthoxy-propoxylés, on peut citer notamment le di(phényl-1 éthyl)phénol éthoxylé avec 5 motifs OE, le di(phényl-1 éthyl)phénol éthoxylé avec 10 motifs OE, le tri(phényl-1 éthyl)phénol éthoxylé avec 16 motifs OE, le tri(phényl-1 éthyl)phénol éthoxylé avec 20 motifs OE, le tri(phényl-1 éthyl)phénol éthoxylé avec 25 motifs OE, le tri(phényl-1 éthyl)phénol éthoxylé avec 40 motifs OE, les tri(phényl-1 éthyl)phénols éthoxy-propoxylés avec 25 motifs OE + OP, le nonylphénol éthoxylé avec 2 motifs OE, le nonylphénol éthoxylé avec 4 motifs OE, le nonylphénol éthoxylé avec 6 motifs OE, le nonylphénol éthoxylé avec 9 motifs OE, les nonylphénols éthoxy-propoxylés avec 25 motifs OE + OP, les nonylphénols éthoxy-propoxylés avec 30 motifs OE + OP, les nonylphénols éthoxy-propoxylés avec 40 motifs OE + OP, les nonylphénols éthoxy-propoxylés avec 55 motifs OE + OP, les nonylphénols éthoxy-propoxylés avec 80 motifs OE + OP.

Les granulés redispersables selon l'invention comprennent en outre au moins un composé hydrosoluble choisi parmi les polyélectrolytes appartenant à la famille des polyacides faibles. Plus particulièrement, ce composé est un solide.

Selon un mode de réalisation particulier de l'invention, ce composé hydrosoluble est choisi parmi les polyélectrolytes de nature organique issus de la polymérisation de monomères qui ont la formule générale suivante : 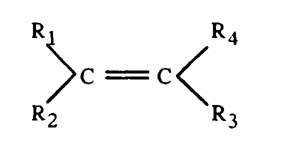 formule dans laquelle Ri, identiques ou différents représentent H, CH₃, -(CH₂)ₙ CO₂H avec n = 0 à 4 et au moins l'un des Ri porte une fonction acide carboxylique (-CO₂H).

A titre d'exemples non limitatifs, on peut citer les acides arylique, métacrylique, maléique, fumarique, itaconique, crotonique.

Conviennent également à l'invention, les copolymères obtenus à partir des monomères répondant à la formule générale précédente et ceux obtenus à l'aide de ces monomères et d'autres monomères, en particulier les dérivés vinyliques comme les alcools vinyliques et les vinyl amides telle que la vinylpyrrolidinone. On peut également citer les copolymères obtenus à partir d'alkyle vinyl ether et d'acide maléique ainsi que ceux obtenus à partir de vinyl styrène et d'acide maléique qui sont notamment décrits dans l'encyclopédie KIRK-OTHMER intitulé "ENCYCLOPEDIA OF CHEMICAL TECHNOLOGY" - Volume 18 - 3 ème édition - Wiley interscience publication - 1982.

Conviennent également à l'invention les polymères peptidiques dérivés de la polycondensation d'acides aminés, notamment de l'acide aspartique et glutamique ou des précurseurs des diaminodiacides. Ces polymères peuvent être aussi bien des homopolymères dérivés de l'acide aspartique ou glutamique que des copolymères dérivés de l'acide aspartique et de l'acide glutamique en proportions quelconques, ou des copolymères dérivés de l'acide aspartique et / ou glutamique et d'aminoacides autres. Parmi les aminoacides copolymèrisables, on peut citer la glycine, l'alanine, la leucine, l'isoleucine, la phényl alanine, la méthionine, l'histidine, la proline, la lysine, la sérine, la thréonine, la cystéine...

Les polyélectrolytes préférés présentent un degré de polymérisation faible.

La masse moléculaire en poids des polyélectrolytes est plus particulièrement inférieure à 20000 g/mole. De préférence, elle est comprise entre 1000 et 5000 g/mole.

Bien entendu, il est tout à fait envisageable d'utiliser ces différents types de composés hydrosolubles en combinaison.

Les granulés redispersables de la présente invention peuvent contenir en outre un tensio-actif supplémentaire ionique.

Les tensio-actifs supplémentaires ioniques peuvent plus particulièrement être des agents tensio-actifs amphotères, les alkyl-bétaïnes, les alkyldiméthylbétaïnes, les alkylamidopropylbétaines, les alkylamido-propyldiméthylbétaïnes, les alkyltriméthylsulfobétaïnes, les dérivés d'imidazoline tels que les alkylamphoacétates, alkylamphodiacétates, alkylampho-propionates, alkyl-amphodipropionates, les alkylsultaïnes ou les alkylamidopropyl-hydroxysultaïnes, les produits de condensation d'acides gras et d'hydrolysats de protéines, les dérivés amphotères des alkylpolyamines comme l'Amphionic XL® commercialisé par Rhône-Poulenc, Ampholac 7T/X® et Ampholac 7C/X® commercialisés par Berol Nobel.

Les granulés selon l'invention peuvent en outre comprendre au moins un tensio-actif supplémentaire anionique.

On peut utiliser à ce titre des sels hydrosolubles d'alkylsulfates, d'alkyléthersulfates, les alkyliséthionates et les alkyltaurates ou leurs sels, les alkylcarboxylates, les alkylsulfosuccinates ou les alkylsuccinamates, les alkylsarcosinates, les dérivés alkylés d'hydrolysats de protéines, les acylaspartates, les phosphates esters d'alkyle et/ou d'alkyléther et/ou d'alkylaryléther. Le cation est en général un métal alcalin ou alcalino-terreux, tels que le sodium, le potassium, le lithium, le magnésium, ou un groupement ammonium NR₄⁺ avec R, identiques ou différents, représentant un radical alkyle substitué ou non par un atome d'oxygène ou d'azote.

Il est possible d'ajouter aux granulés redispersables selon l'invention, tout additif classique selon le domaine d'application de ces derniers.

Comme cela a été indiqué auparavant, les granulés redispersables selon l'invention, présentent des teneurs élevées en matière active.

Ainsi, la teneur en matière active est comprise, de manière avantageuse, entre 40 et 90 parties en poids dans le granulé. Selon un mode de réalisation particulier de l'invention, la teneur en matière active est supérieure à 50 parties en poids. De préférence, cette teneur est d'au moins 70 parties en poids.

La quantité de tensio-actif non ionique varie entre 1 et 20 parties en poids dans le granulé. De préférence, cette teneur est comprise entre 2 et 10 parties en poids.

La quantité de composé hydrosoluble varie entre 7 et 50 parties en poids dans le granulé. Selon une variante particulière, cette quantité est comprise entre 8 et 25 parties en poids.

Le rapport pondéral des concentrations entre le tensio-actif non ionique et le composé hydrosoluble, est compris entre 30 / 70 et 10 / 90.

Dans le cas où les granulés redispersables de l'invention comprennent au moins un tensio-actif supplémentaire, le rapport pondéral des concentrations entre le tensio-actif non ionique et le tensio-actif supplémentaire, est compris entre 5 et 10.

Le procédé de préparation des granulés redispersables va maintenant être décrit.

Comme indiqué précédemment, le procédé consiste dans une première étape à préparer une émulsion dans l'eau d'au moins une matière active, d'au moins un tensio-actif non ionique, d'au moins un composé hydrosoluble.

L'émulsion peut aussi comprendre au moins un tensio-actif supplémentaire si un tel composé est employé.

Bien évidemment, dans le cas où des additifs classiques sont utilisés, on peut les ajouter lors de la formation de l'émulsion.

On peut mettre en oeuvre toutes les méthodes de préparation d'émulsions connues de l'homme du métier et qui sont décrites dans "ENCYCLOPEDIA of EMULSIONS TECHNOLOGY", volumes 1 à 3 de Paul BECHER édités par MARCEL DEKKER INC., 1983.

Ainsi, la méthode dite d'émulsification en phase directe convient à la préparation des granulés selon l'invention. Il est rappelé brièvement que cette méthode consiste à préparer un mélange contenant l'eau et le ou les tensio-actifs, y compris le composé hydrosoluble, puis à introduire la matière active sous forme liquide, sous agitation.

Une autre méthode convenable est l'émulsification par inversion de phases. Selon cette voie, on mélange la matière active avec un tensio-actif non ionique et on introduit goutte à goutte et sous agitation, l'eau pouvant contenir les autres constituants tels que le solide hydrosoluble par exemple. A partir d'une certaine quantité d'eau introduite, il se produit une inversion de l'émulsion. On obtient dors une émulsion directe huile dans eau. On dilue ensuite l'émulsion obtenue dans l'eau de manière à obtenir une fraction volumique en phase dispersée appropriée.

On peut enfin préparer l'émulsion en mettant en oeuvre des broyeurs colloïdaux tels que MENTON GAULIN et MICROFLUIDIZER (MICROFLUIDICS).

La granulométrie moyenne de l'émulsion est en général comprise entre 0,1 et 10 micromètres et préférentiellement entre 0,2 et 5 micromètres.

Selon une variante préférée de l'invention, on prépare au préalable un mélange comprenant l'eau et le composé hydrosoluble (préémulsion).

L'émulsification peut être réalisée à une température voisine de la température ambiante, bien que des températures plus faibles ou plus élevées soient envisageables.

La quantité de matière sèche de l'émulsion est généralement comprise entre 10 et 70 % en poids et préférentiellement entre 40 et 60% en poids.

Les teneurs respectives de divers constituants sont choisies de telle sorte que les granulés séchés présentent la composition définie auparavant.

La seconde étape du procédé de préparation selon l'invention consiste à sécher l'émulsion ainsi formulée pour obtenir des granulés.

La méthode mise en oeuvre pour éliminer l'eau de l'émulsion et obtenir des granulés peut être effectuée par tout moyen connu de l'homme du métier. Cependant, selon une réalisation particulière de l'invention, on met en oeuvre une méthode de séchage rapide de l'émulsion.

Conviennent à ce titre la lyophilisation, qui correspond à une étape de congélation, suivie d'une étape de sublimation, ou bien encore le séchage par atomisation.

Ces modes de séchage, et plus particulièrement le dernier, sont particulièrement indiqués car ils permettent de conserver l'émulsion en l'état et d'obtenir directement des granulés.

Le séchage par atomisation peut s'effectuer de manière habituelle dans tout appareil connu tel que par exemple une tour d'atomisation associant une pulvérisation réalisée par une buse ou une turbine avec un courant de gaz chaud.

La température d'entrée du gaz chaud (en général de l'air), en tête de colonne, est de préférence compris entre 100 et 115°C et la température de sortie est de préférence comprise entre 55 et 65°C.

Il est à noter que des additifs, tels que les agents antimottants peuvent être incorporés aux granulés au moment de cette seconde étape de séchage. On recommande d'utiliser une charge choisie notamment parmi le carbonate de calcium, le sulfate de baryum, le kaolin, la silice, la bentonite, l'oxyde de titane, le talc, l'alumine hydratée et le sulfoaluminate de calcium.

Des exemples concrets mais non limitatifs vont maintenant être présentés.

### EXEMPLE 1

On prépare une émulsion de composition suivante :

| Composition | % poids |
|---|---|
| huile de vaseline | 40 |
| nonyl phénol éthoxylé avec 10 motifs OE* | 1 |
| acide polyacrylique** (Mw = 2000) | 9 |
| eau | 50 |

| | |
|---|---|
| (*) Le nonyl phénol éthoxylé est commercialisé par Rhone-Poulenc sous le nom de Soprophor® BC10. | |
| (**) L'acide polyacrylique est commercialisé par la société Aldrich. | |

On réalise au préalable une préémulsion à l'aide d'un ULTRA-TURRAX® (IKA) par introduction de l'huile de vaseline dans l'eau contenant le tensio-actif et le polyacide. L'émulsion est ensuite introduite dans un broyeur colloïdal de type MICROFLUIDIZER-M11OT® (MICROFLUIDICS).
La taille moyenne de l'émulsion mesurée à l'aide du granulomètre laser SYMPATEC® est de 0,5 micromètres

L'émulsion résultante est séchée au moyen d'un atomiseur de laboratoire type BUCHI®, avec une température d'entrée des gaz de 110°C.

On obtient des granulés présentant 80 % en poids d'huile.

La mise en contact des granulés avec l'eau entraîne leur dispersion spontanée et la formation d'une émulsion, qui après examen au microscope, présente une granulométrie voisine à celle de l'émulsion de départ.

### EXEMPLE 2

On prépare une émulsion de composition suivante :

| Composition | % poids |
|---|---|
| huile silicone 47V300 | 40 |
| nonyl phénol éthoxylé avec 10 motifs OE* | 1 |
| acide polyacrylique** (Mw = 2000) | 9 |
| eau | 50 |

| | |
|---|---|
| (*) Le nonyl phénol éthoxylé est commercialisé par Rhone-Poulenc sous le nom de Soprophor® BC10. | |
| (**) L'acide polyacrylique est commercialisé par la société Aldrich. | |

On réalise au préalable une préémulsion à l'aide d'un ULTRA-TURRAX® par introduction de l'huile de vaseline dans l'eau contenant le tensio-actif et le polyacide. L'émulsion est ensuite introduite dans un broyeur colloïdal de type MICROFLUIDIZER-M11OT®.

L'émulsion résultante est séchée au moyen d'un atomiseur de laboratoire type BUCHI®, avec une température d'entrée des gaz de 110°C.

On obtient des granulés présentant 80 % en poids d'huile.

La mise en contact des granulés avec l'eau entraîne leur dispersion spontanée et la formation d'une émulsion, qui après examen au microscope, présente une granulométrie voisine à celle de l'émulsion de départ.

### EXEMPLE 3

On prépare une émulsion de composition suivante :

| Composition | % poids |
|---|---|
| huile de vaseline | 40 |
| nonyl phénol éthoxylé avec 10 motifs OE* | 1 |
| acide polyacrylique** (Mw = 5000) | 18 |
| eau | 41 |

| | |
|---|---|
| (*) Le nonyl phénol éthoxylé est commercialisé pu Rhone-Poulenc sous le nom de Soprophor® BC10. | |
| (**) L'acide polyacrylique est commercialisé par la société Aldrich et est en solution à 50 % poids dans de l'eau. | |

On réalise au préalable une préémulsion à l'aide d'un ULTRA-TURRAX® par introduction de l'huile de vaseline dans l'eau contenant le tensio-actif et le polyacide. L'émulsion est ensuite introduite dans un broyeur colloïdal de type MICROFLUIDIZER-M11OT®.

L'émulsion résultante est séchée au moyen d'un atomiseur de laboratoire type BUCHI®, avec une température d'entrée des gaz de 110°C.

On obtient des granulés présentant 80% en poids d'huile.

La mise en contact des granulés avec l'eau entraîne leur dispersion spontanée et la formation d'une émulsion, qui après examen au microscope, présente une granulométrie voisine à celle de l'émulsion de départ.

## Revendications

1. Granulés redispersables dans l'eau comprenant au moins une matière active sous forme de liquide hydrophobe, caractérisés en ce qu'ils comprennent :
- au moins une matière active sous forme de liquide hydrophobe,
- au moins un tensio-actif non ionique choisi parmi les dérivés polyoxyalkylénés,
- au moins un composé hydrosoluble choisi parmi les polyélectrolytes appartenant à la famille des polyacides faibles.

2. Granulés selon la revendication précédente, caractérisés en ce que le tensio-actif non ionique est choisi parmi :
- les alcools gras éthoxylés ou éthoxy-propoxylés
- les triglycérides éthoxylés ou éthoxy-propoxylés
- les acides gras ethoxylés ou éthoxy-propoxylés
- les esters de sorbitan éthoxylés ou éthoxy-propoxylés
- les amines grasses éthoxylées ou éthoxy-propoxylées
- les di(phényl-1 éthyl) phénols éthoxylés ou éthoxy-propoxylés
- les tri(phényl-1 éthyl) phénols éthoxylés ou éthoxy-propoxylés
- les alkyls phénols éthoxylés ou éthoxy-propoxylés

3. Granulés selon l'une quelconque des revendications 1 à 2, caractérisés en ce que le composé hydrosoluble est choisi parmi les polyélectrolytes de nature organique issus de la polymérisation de monomères qui ont la formule générale suivante : 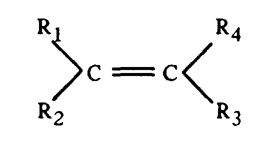 avec Ri, identiques ou différents, représentant H ou CH₃ ou (CH₂)ₙ-CO₂H avec n = 0 à 4, et au moins l'un des Ri portant une fonction acide carboxylique (-CO₂H).

4. Granulés selon la revendication précédente, caractérisés en ce que les polyélectrolytes présentent une masse moléculaire en poids inférieure à 20000 g/mole.

5. Granulés selon l'une quelconque des revendications précédentes, caractérisés en ce qu'ils peuvent comprendre en outre au moins un tensio-actif supplémentaire ionique.

6. Granulés selon l'une quelconque des revendications précédentes, caractérisés en ce que la teneur en matière active est comprise entre 40 et 90 parties en poids dans le granulé.

7. Granulés selon l'une quelconque des revendications précédentes, caractérisés en ce que la quantité de tensio-actif non ionique varie entre 1 et 20 parties en poids dans le granulé.

8. Granulés selon l'une quelconque des revendications précédentes, caractérisés en ce que la quantité de composé hydrosoluble varie entre 7 et 50 parties en poids dans le granulé.

9. Granulés selon l'une quelconque des revendications précédentes, caractérisés en ce que le rapport pondéral des concentrations entre le tensio-actif non ionique et le ou les tensio-actifs supplémentaires est compris entre 5 et 10.

10. Granulés selon l'une quelconque des revendications précédentes, caractérisés en ce que le rapport pondéral des concentrations entre le tensio-actif non ionique et le composé hydrosoluble est compris entre 30 / 70 et 10 / 90.

11. Procédé de préparation des granulés redispersables dans l'eau tels que définis à l'une quelconque des revendications 1 à 10, caractérisé en ce que l'on effectue les étapes suivantes :
- on prépare une émulsion dans l'eau d'au moins une matière active, d'au moins un tensio-actif non ionique, d'au moins un composé hydrosoluble,
- on sèche l'émulsion ainsi obtenue.

12. Procédé selon la revendication précédente, caractérisé en ce que l'on prépare une émulsion comprenant 10 & 70 % en poids de matières sèches.

13. Procédé selon l'une quelconque des revendications 11 a 13, caractérisé en ce que l'on effectue un séchage par atomisation.

## Claims

1. Water-redispersible granules comprising at least one active ingredient in the form of a hydrophobic liquid characterized in that they comprise:
• at least one active ingredient in the form of a hydrophobic liquid;
• at least one non ionic surfactant selected from polyoxyalkylenated derivatives;
• at least one water-soluble compound selected from polyelectrolytes belonging to the weak polyacid group.

2. Granules according to the preceding claim, characterized in that the non ionic surfactant is selected from:
• ethoxylated or ethoxypropylated fatty alcohols;
• ethoxylated or ethoxypropylated triglycerides;
• ethoxylated or ethoxypropylated fatty acids;
• ethoxylated or ethoxypropylated sorbitan esters;
• ethoxylated or ethoxypropylated fatty amines;
• ethoxylated or ethoxypropylated di(1-phenylethyl) phenols;
• ethoxylated or ethoxypropylated tri(1-phenylethyl) phenols;
• ethoxylated or ethoxypropylated alkylphenols.

3. Granules according to claim 1 or claim. 2, characterized in that the water-soluble compound is selected from organic polyelectrolytes originating from the polymerisation of monomers with the following general formula: 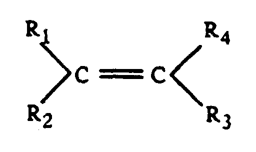 where Rᵢ, which may be identical or different, represent H or CH₃ or (CH₂)ₙ-COOH where n = 0 to 4, and at least one Rᵢ carries a carboxylic acid function (-COOH).

4. Granules according to the preceding claim, characterized in that the polyelectrolytes have a mass average molecular mass of less than 20000 g/mole.

5. Granules according to any one of the preceding claims, characterized in that they may also comprise at least one supplemental ionic surfactant.

6. Granules according to any one of the preceding claims, characterized in that the amount of active ingredient is in the range 40 to 90 parts by weight in the granule.

7. Granules according to any one of the preceding claims, characterized in that the amount of ionic surfactant is in the range 1 to 20 parts by weight in the granule.

8. Granules according to any one of the preceding claims, characterized in that the amount of water-soluble compound is in the range 7 to 50 parts by weight in the granule.

9. Granules according to any one of the preceding claims, characterized in that the ratio of the concentrations of the non ionic surfactant to the supplemental surfactant or surfactants is in the range 5 to 10 by weight.

10. Granules according to any one of the preceding claims, characterized in that the ratio of the concentrations of the non ionic surfactant to the water-soluble compound is in the range 30/70 to 10/90 by weight.

11. A process for preparing water-redispersible granules as defined in any one of claims 1 to 10, characterized in that the following steps are carried out:
• an emulsion of at least one active ingredient, at least one non ionic surfactant and at least one water-soluble compound is prepared in water;
• the emulsion obtained is then dried.

12. A process according to the preceding claim, characterized in that an emulsion comprising 10% to 70% by weight of dry matter is prepared.

13. A process according to any one of claims 11 to 13, characterized in that drying is carried out by spraying.

## Patentansprüche

1. In Wasser wiederdispergierbare Granulate mit mindestens einem Wirkstoff in Form einer hydrophoben Flüssigkeit, dadurch gekennzeichnet, daß sie folgendes enthalten:
- mindestens eben Wirkstoff in Form einer hydrophoben Flüssigkeit,
- mindestens ein nichtionisches Tensid ausgewählt aus Polyoxyalkylenderivaten,
- mindestens eine wasserlösliche Verbindung ausgewählt aus den Polyelektrolyten, die zur Familie der schwachen Polysäuren gehören.

2. Granulate nach dem vorangehenden Anspruch, dadurch gekennzeichnet, daß das nichtionische Tensid ausgewählt wird aus:
- den ethoxylierten oder ethoxy-propoxylierten Fettalkoholen,
- den ethoxylierten oder ethoxy-propoxylierten Triglyceriden,
- den ethoxylierten oder ethoxy-propoxylierten Fettsäuren,
- den ethoxylierten oder ethoxy-propoxylierten Sorbitanestern,
- den ethoxylierten oder ethoxy-propoxylierten Fettaminen,
- den ethoxylierten oder ethoxy-propoxylierten Di-(phenyl-1-ethyl)-phenolen,
- den ethoxylierten oder ethoxy-propoxylierten Tri-(phenyl-1-ethyl)-phenolen,
- den ethoxylierten oder ethoxy-propoxylierten Alkylphenolen.

3. Granulate nach einem der Ansprüche 1 oder 2, dadurch gekennzeichnet, daß die wasserlösliche Verbindung aus den Polyelektrolyten organischer Natur ausgewählt ist, die aus der Polymerisation von Monomeren der folgenden allgemeinen Formel hervorgegangen sind: 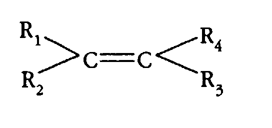 in der die Ri gleich oder verschieden H oder CH₃ oder (CH₂)ₙ-CO₂H mit n = 0 bis 4 bedeuten und in der mindestens ein Ri eine Carbonsäuregruppe trägt.

4. Granulate nach dem vorangehenden Anspruch, dadurch gekennzeichnet, daß die Polyelektrolyte eine Molmasse unter 20.000 g/mol aufweisen.

5. Granulate nach irgendeinem der vorangehenden Ansprüche, dadurch gekennzeichnet, daß sie außerdem mindestens ein zusätzliches ionisches Tensid enthalten können.

6. Granulate nach irgendeinem der vorangehenden Ansprüche, dadurch gekennzeichnet, daß der Wirkstoffgehalt im Granulat zwischen 40 und 90 Gewichtsteilen liegt.

7. Granulate nach irgendeinem der vorangehenden Ansprüche, dadurch gekennzeichnet, daß die Menge des nichtionischen Tensids im Granulat zwischen 1 und 20 Gewichtsteilen schwankt.

8. Granulate nach irgendeinem der vorangehenden Ansprüche, dadurch gekennzeichnet, daß die Menge der wasserlöslichen Verbindung im Granulat zwischen 7 und 50 Gewichtsteilen schwankt.

9. Granulate nach irgendeinem der vorangehenden Ansprüche, dadurch gekennzeichnet, daß das Gewichtsverhältnis der Konzentrationen zwischen dem nichtionischen Tensid und dem oder den zusätzlichen Tensiden zwischen 5 und 10 liegt.

10. Granulate nach irgendeinem der vorangehenden Ansprüche, dadurch gekennzeichnet, daß das Gewichtsverhältnis der Konzentrationen zwischen dem nichtionischen Tensid und der wasserlöslichen Verbindung zwischen 30/70 und 10/90 liegt.

11. Verfahren zur Herstellung von in Wasser wiederdispergierbaren Granulaten nach irgendeinem der Ansprüche 1 bis 10, dadurch gekennzeichnet, daß man die folgenden Schritte durchführt:
- man stellt eine wäßrige Emulsion mit mindestens einem Wirkstoff, mindestens einem nichtionischen Tensid und mindestens einer wasserlöslichen Verbindung her,
- man trocknet die so erhaltene Emulsion.

12. Verfahren nach dem vorangehenden Anspruch, dadurch gekennzeichnet, daß man eine Emulsion herstellt, die 10 bis 70 Gew.-% Trockensubstanz enthält.

13. Verfahren nach Anspruch 11 oder 12, dadurch gekennzeichnet, daß man eine Sprühtrocknung durchführt.
